# EUROPÄISCHE PATENTSCHRIFT

(11) **EP 0 774 591 B1**
(45) Veröffentlichungstag und Bekanntmachung des Hinweises auf die Patenterteilung: **08.08.2001**
(21) Anmeldenummer: 96115185.9
(22) Anmeldetag: 21.09.1996
(51) Int. Cl.: F16C 1/22

(54) **Vorrichtung zum Spannen von Zeilzügen**
Tensioning device for control cables
Dispositif de tension de câbles de commande

(30) Priorität: 18.11.1995 DE 19543136
(43) Veröffentlichungstag der Anmeldung: 21.05.1997
(73) Patentinhaber: Dr.Ing.h.c. F. Porsche Aktiengesellschaft, 70435 Stuttgart (DE)
(72) Erfinder: Mertens, Carsten-Jörg, 71134 Aidlingen (DE)

(56) Entgegenhaltungen:
- EP-A- 0 475 017
- WO-A-95/30839
- DE-A- 3 929 298
- DE-U- 9 212 795
- FR-A- 2 686 663
- US-A- 5 261 293

## Beschreibung

Die Erfindung bezieht sich auf eine Vorrichtung zum Verbinden und Spannen von Seilzügen nach dem Oberbegriff des Anspruches 1.

Aus der DE 39 29 298 A1 ist eine längenverstellbare Verbindung zweier von einem Seilzug durchsetzten Seilzughülle bekannt, zwischen deren einander zugewandten Hüllenenden zwei die Hüllenden aufnehmende Schraubteile angeordnet sind. Diese sind ihre wirksame Gesamtlänge verändernd ineinander schraubbar und in einer definierten Verschraubungslage gegeneinander fixierbar. Eines der beiden Schraubteile ist als zumindest in Druckrichtung begrenzt teleskopierbares Bauteil ausgebildet. Dieses nimmt an einem Ende das ihm zugeordnete Seilzughüllenende auf und mit dem anderen Ende ist es im zweiten Schraubteil verschraubbar.

Die EP-A-0 475 017 zeigt eine Einstellvorrichtung für Seilzüge, die zum endseitigen Festlegen eines Seilzuges an einer Haltekonsole vorgesehen ist. Die Einstellvorrichtung ist selbstspannend ausgeführt und besteht aus einem an der Haltekonsole festgelegten Widerlager, einer Stützhülse, einer zwischen dem Widerlager und der Stützhülse gehaltenen Sperrhülse, einem im Widerlager geführten Hüllenendstück sowie einer Betätigungshülse, die mit der Sperrhülse verbunden ist. Zwischen der Stützhülse und dem Hüllenendstück ist eine Feder angeordnet. Die Sperrhülse ist innenseitig mit einer Verzahnung versehen, die mit einer außenseitig am Hüllenendstück angebrachten Verzahnung in Eingriff zu bringen ist. Da beide Verzahnungen nur über ein Kreissegment vorgesehen sind, können die Verzahnungen durch Verdrehen der Sperrhülse außer Eingriff gebrachte werden, mit der Folge, dass nun Sperrhülse und Hüllenendstück nicht weiter miteinander verbunden sind und durch die Kraft der Feder gegeneinander bewegt werden können.

Das DE-GM 92 12 795 U offenbart eine Vorrichtung zum Verbinden und Spannen zweier Seilzüge der eingangs genannten Art, wobei einer der Seilzüge einstellbar gehalten ist. Die Einstellung dieses Seilzuges erfolgt durch eine Hülse, die in einem Gehäuse geführt und außenseits mit radialen Vertiefungen versehen ist. Die Hülse dient als Lagerung für die Umhüllung des Seilzuges, Zur Fixierung der Position der Hülse wird in diejenige radiale Vertiefung der Hülse, die gerade noch aus dem Gehäuse herausschaut, ein Klips eingeschoben, so dass der Klips am Gehäuse anliegt und eine weitere Bewegung der Hülse unterbunden ist. Das Gehäuse ist zweiteilig ausgeführt und kann zum Einlegen des nicht einstellbaren Seilzuges aufgeklappt werden.

Aufgabe der Erfindung ist es, eine verbesserte Spannvorrichtung für zu verbindende Gasseilzüge in Fahrzeugen zu schaffen, die einfach montierbar sind und die Vorrichtung ein selbsttätiges Spannen der Seilzüge gewährleisten.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß das Spannelement in der Vorrichtung die Seilzüge in einem Gehäuse, einem Seilumlenkelement oder der gleichen Einrichtung spannt und an das Gehäuse an entsprechender Stelle im Fahrzeug befestigbar ist.

Die Gasseilzüge vom Gaspedal und Motor werden in diesem Gehäuse oder einem Seilumlenkelement oder einer ähnlichen Einrichtung zusammengefügt und beispielsweise durch Einhängen miteinander verbunden. Während dieses Vorganges ist die Spannvorrichtung in einer Verbindungsstellung und die Gasseilzüge können noch eine Lose aufweisen.

Die Spannvorrichtung, im wesentlichen bestehend aus einer axial verstellbaren Verschlußkappe und einer auf diese einwirkenden Druckfeder, bewirkt in einfacher Weise, daß die Gasseilzüge durch Verdrehen der Verschlußkappe aus einer Verrastung heraus sofort selbsttätig gespannt werden. Zum Auswechseln kann die Verschlußkappe auf dem Gehäuse oder der Seilumlenkung wieder in eine Ursprungslage gedrückt und dann verrastet werden, so daß eine einfache Handhabung zum Seilspannen und zum Auswechseln gewährleistet ist.

In vorteilhafter Weise erfolgt die Verrastung der Verschlußkappe beispielsweise auf dem Hülsenabschnitt des Gehäuses über eine Ringverzahnung, die abschnittsweise vorgesehen ist, so daß bei einem Verdrehen der Verschlußkappe dieser außer Eingriff mit der Verzahnung auf dem Hülsenabschnitt des Gehäuses steht und die Spannstellung eingenommen wird.

Damit bei außer Eingriff stehenden Verzahnungen die Verschlußkappe am Gehäuse gehalten wird und nicht abfallen kann, sind am Öffnungsrand der Kappe mindestens zwei Nocken vorgesehen, die in Längsrillen des Hülsenabschnitts eingreifen und endseitig der Rillen anschlagen.

Die Verbindungsstelle der beiden Gaszugseile ist im Gehäuse angeordnet, das im wesentlichen aus zwei über ein Filmscharnier verbundene Hülsenhälften besteht, die über beispielsweise eine Clips-Verbindung zusammengehalten werden. Statt des Gehäuses kann auch ein eine Umlenkung um 90° aufweisendes Gehäuse verwendet werden, das an einem Ende einen Hülsenabschnitt zum Aufstecken der Abschlußkappe aufweist.

Die Spannvorrichtung besteht aus wenigen Teilen, wie dem Gehäuse, der Verschlußkappe und der Druckfeder. Die Verschlußkappe ist in einfacher Weise mit der ersten Seilzughülse und das Gehäuse mit der zweiten Seilzughülse verbindbar. Die Verbindung der beiden Seilzüge im inneren des Gehäuses erfolgt bei geöffneten Hülsen des Gehäuses und ist frei zugänglich, auch zum Lösen dieser Verbindung. Ein Spannen der Seilzüge zum Toleranzausgleich oder um eine sonstige Lose auszugleichen erfolgt nur durch ein Entsperren der Verschlußkappe auf dem Hülsenabschnitt des Gehäuses, wobei dann über die Druckfeder selbsttätig ein Spannen erfolgt.

Ein Ausführungsbeispiel der Erfindung ist in der Zeichnung dargestellt und wird im folgenden näher beschrieben:

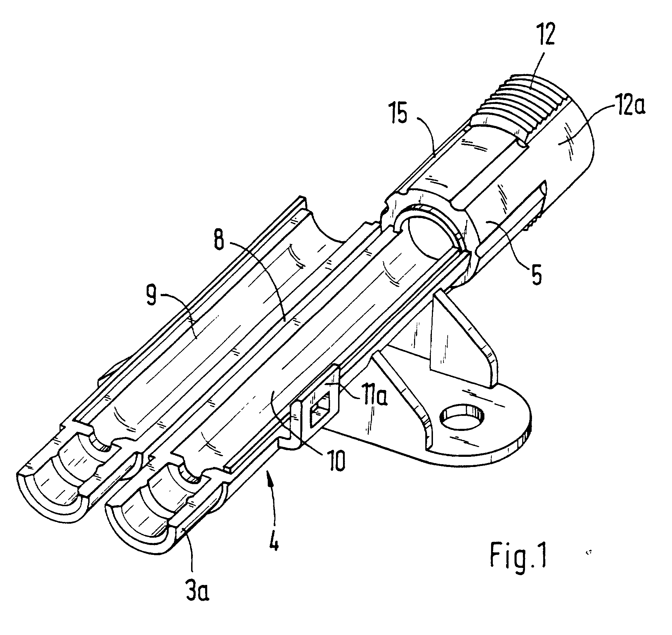

Es zeigen
- Fig. 1: eine schaubildliche Darstellung des Gehäuses mit Hülsenabschnitt,

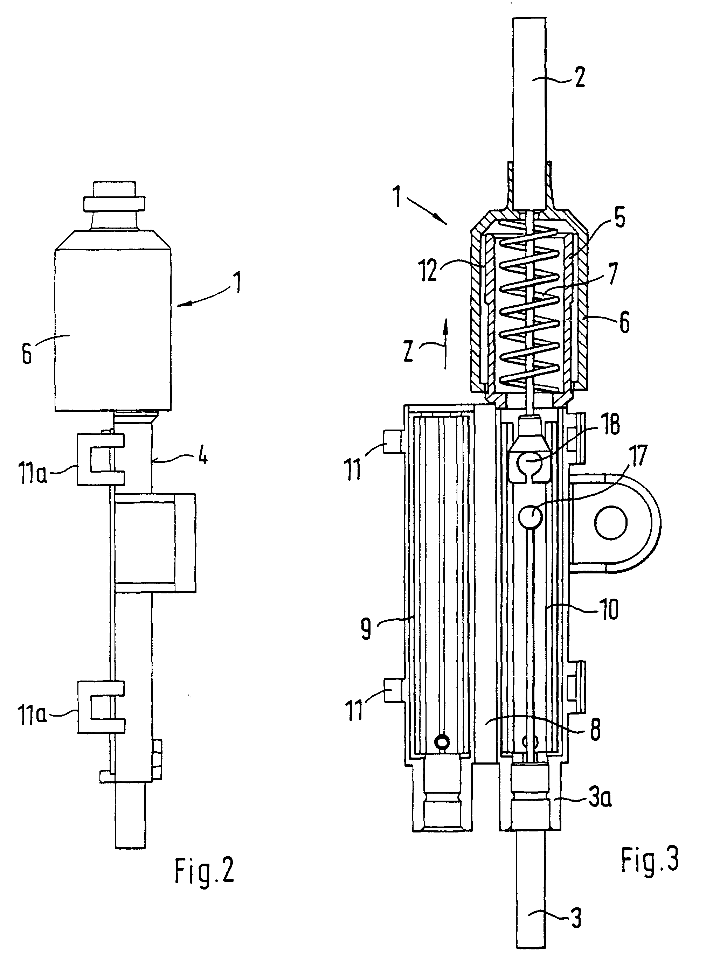

- Fig. 2: eine Ansicht auf das Gehäuse mit Spannvorrichtung,
- Fig. 3: ein aufgeklapptes, offenes Gehäuse mit Spannvorrichtung bestehend aus einer Verschlußkappe und einer Druckfeder,

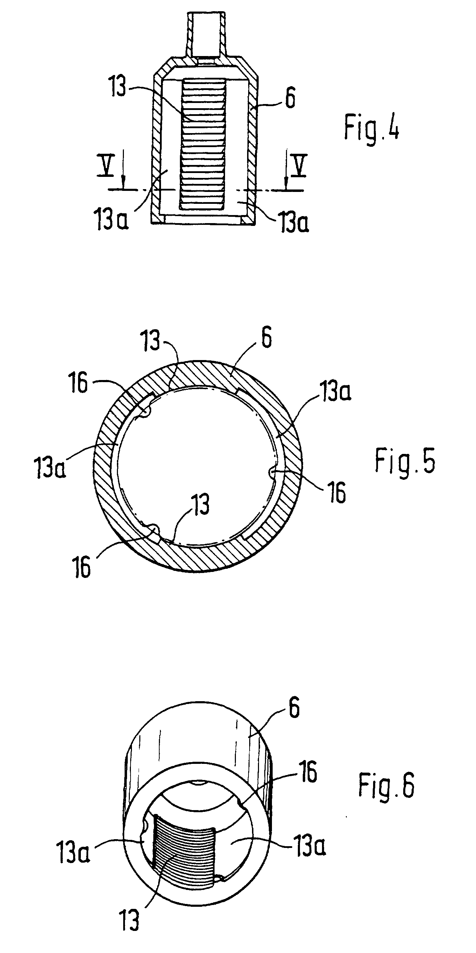

- Fig. 4: einen Längsschnitt durch die Verschlußkappe mit Verzahnungen,
- Fig. 5: einen Schnitt durch die Verschlußkappe nach der Linie V-V der Fig. 4,
- Fig. 6: eine schaubildliche Darstellung der Verschlußkappe,

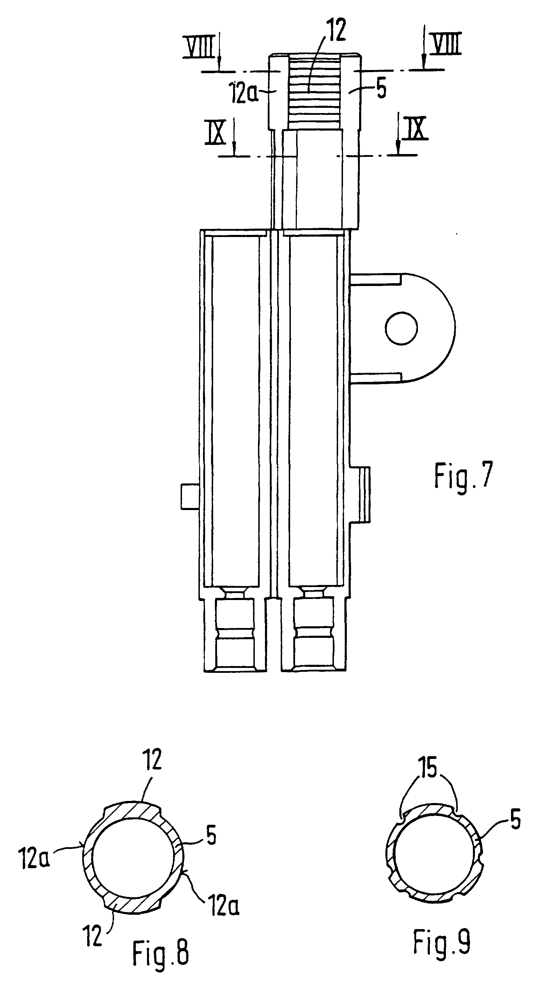

- Fig. 7: eine Draufsicht auf das geöffnete Gehäuse,
- Fig. 8: einen Schnitt durch den Hülsenabschnitt nach der Linie VIII-VIII der Fig. 7 und
- Fig. 9: einen Schnitt durch den Hülsenabschnitt nach der Linie VIIII-VIIII der Fig. 7

Die Spannvorrichtung für Gasseilzüge 2, 3 in Fahrzeugen umfaßt ein Gehäuse 4 mit einem Hülsenabschnitt 5, auf dem eine Verschlußkappe 6 angeordnet ist, die unter der Spannung einer im Gehäuse 4 abgestützten Druckfeder 7 steht.

Das Gehäuse 4 besteht aus zwei über ein Filmscharnier 8 verbundene Hülsen 9, 10, wobei an der einen Hülse 10 der Hülsenabschnitt 5 angeformt ist und gegenüber der weiteren Hülse 9 vorsteht. Die beiden das Gehäuse 4 bildenden Hülsen 9, 10 sind über eine Clips-Verbindung 11, 11a in einer geschlossenenen Stellung zusammengehalten, wobei das Teil 11 aus einer Nase und das Gegenstück aus einer entsprechenden Aufnahme 11a besteht. Da das Filmscharnier 8 eine auseinanderspreizende Wirkung auf die Hülsen 9, 10 ausübt, werden die Hülsen im zusammengeklappten Zustand unter Spannung zueinander gehalten.

Der Hülsenabschnitt 5 des Gehäuses sowie die Verschlußkappe 6 weisen miteinander korrespondierende Verzahnung 12, 13 auf. Diese Verzahnungen 12, 13 sind vorzugsweise gegenüberliegend angeordnet und weisen zwischen sich vertieft liegende Freiflächen 12a, 13a auf.

In einer Verbindungsstellung sind die Verzahnungen 12, 13 in Eingriff miteinander. Zur Einnahme der Spannstellung durch ein Verdrehen der Verschlußkappe 6 auf dem Hülsenabschnitt 5 sind die Verzahnungen 12, 13 außer Eingriff, so daß die Verzahnungen 13 den Freiflächen 12a des Hülsenabschnitts 5 gegenüberstehen und die Druckfeder 7 die Verschlußkappe 6 axial soweit vom Hülsenabschnitt 5 wegdrückt, daß die beiden verbundenen Gasseile 2, 3 gespannt werden.

Außenseitig des Hülsenabschnitts 5 sind Längsrillen 15 vorgesehen, in denen Nocken 16 der Verschlußkappe 6 gleiten. Diese Nocken 16 sind am Öffnungsrand angeordnet und schlagen in einer Endstellung der Kappe 6 endseitig der Längsrille an und begrenzen somit die Axialbewegung der Kappe 6.

Zum Spannen der beiden im Gehäuse 4 verbindbaren Gasseilzüge 2, 3 wird die eine Seilhülle des Seilzuges 3 in einem Ansatz 3a des Gehäuses 4 festgesetzt und das Seil 3 mit einem Kopf 17 in einer Aufnahme 18 des weiteren Seiles 2 eingehängt. Die Hülle dieses Seiles 2 wird in der Kappe 6 befestigt. Durch Entriegeln der Kappe 6 vom Hülsenabschnitt 5 wird über die Druckfeder 7 ein Spannen der beiden Seile 2, 3 bewirkt, indem die Kappe 6 sich axial auf dem Hüllenabschnitt 5 in Pfeilrichtung Z verschiebt.

## Patentansprüche

1. Vorrichtung zum Verbinden und Spannen von Seilzügen, mit einem aus zwei Hülsenhälften (9, 10) bestehenden Gehäuse (4) zur Aufnahme einer lösbaren Verbindung der Seilzüge (2, 3), wobei an dem Gehäuse (4) ein Ansatz (3a) zur Aufnahme einer Umhüllung des einen Seilzuges (3) und eine Spannvorrichtung für eine Umhüllung des weiteren Seilzuges (2) angordnet sind, **dadurch gekennzeichnet,** daß die Spannvorrichtung
- einen als erstes Spannelement einstückig am Gehäuse (4) ausgebildeten Hülsenabschnitt (5) und
- eine als zweites Spannelement ausgebildete einstückige Verschlußkappe (6) aufweist, wobei
- in dem zweiten Spannelement die Umhüllung des weiteren Gasseilzugs (2) lagerbar ist und
- in dem zweiten Spannelement eine Druckfeder (7) angeordnet ist, die sich mit einem Ende im Hülsenabschnitt (5) des Gehäuses (4) abstützt und mit ihrem anderen Ende an dem zweiten Spannelement unter Druckspannung anliegt und
- das erste Spannelement und das zweite Spannelement über korrespondierende Verzahnungsabschnitte (12, 13) derart in Eingriff bringbar sind, und daß das zweite Spannelement in einer Verbindungsstellung am ersten Spannelement verrastbar und in einer Spannstellung am ersten Spannelement verschiebbar ist.

2. Vorrichtung nach Anspruch 1, dadurch gekennzeichnet, daß die Verschlußkappe (6) auf dem Hülsenabschnitt (5) des Gehäuses (4) aufsteckbar ist und die innenseitig Verzahnungsabschnitte (13) aufweist, welche korrespondierend mit Verzahnungsabschnitten (12) des Hülsenabschnitts (5) angeordnet sind.

3. Vorrichtung nach den Ansprüchen 1 oder 2, dadurch gekennzeichnet, daß mindestens zwei querverlaufende Verzahnungsabschnitte (12 und 13) auf dem Hülsenabschnitt (5) und in der Verschlußkappe (6) vorgesehen sind, welche sich gegenüberstehen und zwischenliegende Freiflächen (12a, 13a) aufweisen.

4. Vorrichtung nach Anspruch 1 oder einem der vorhergehenden Ansprüche, dadurch gekennzeichnet, daß in der Verbindungsstellung die Verzahnungsabschnitte (12, 13) der Verschlußkappe (6) und des Hülsenabschnitts (5) des Gehäuses (4) ineinandergreifen und in der Spannstellung die Verzahnungsabschnitte (12, 13) außer Eingriff stehen.

5. Vorrichtung nach Anspruch 1 oder einem der vorhergehenden Ansprüche, dadurch gekennzeichnet, daß das Gehäuse (4) über ein Filmscharnier (8) verbundene Hülsenhälften (9, 10) umfaßt, die über eine Clips-Verbindung (11, 11a) in einer geschlossenen Stellung gehalten sind.

6. Vorrichtung nach Anspruch 1 oder einem der vorhergehenden Ansprüche, dadurch gekennzeichnet, daß die Verschlußkappe (6) am Öffnungsrand Nocken (16) aufweist, die in der Verbindungsstellung in Längsrillen (15) des Hülsenabschnitts (5) eingreifen und in einer Endstellung endseitig der Rillen (15) an einem Anschlag anliegen.

## Claims

1. A device for connecting and tensioning traction cables, having a housing (4) comprising two sleeve halves (9, 10) for receiving a releasable connexion of the traction cables (2, 3). wherein an attachment (3a) for receiving a sheathing of one traction cable (3) and a tensioning device for a sheathing of the further traction cable (2) are arranged on the housing (4), **characterized in that** the tensioning device
- has a sleeve portion (5) constructed as a first tensioning member in one piece on the housing (4), and
- a one-piece closure cap (6) constructed as a second tensioning member, wherein
- the sheathing of the further traction cable (2) is displaceable in the second tensioning member, and
- a compression spring (7) supported at one end in the sleeve portion (5) of the housing (4) and resting at its other end on the second tensioning member with compression stressing is arranged in the second tensioning member, and
- the first tensioning member and the second tensioning member can be brought into engagement by way of corresponding toothed portions (12, 13) in this way, and the second tensioning member is lockable in a connected position on the first tensioning member and is displaceable in a tensioning position on the first tensioning member.

2. A device according to Claim 1, **characterized in that** the closure cap (6) can be mounted on the sleeve portion (5) of the housing (4) and has toothed portions (13) on the inside arranged in a manner corresponding to toothed portions (12) of the sleeve portion (5).

3. A device according to Claim 1 or 2, **characterized in that** at least two transversely extending toothed portions (12 and 13) are provided on the sleeve portion (5) and in the closure cap (6), and are opposite one another and have free faces (12a, 13a) arranged therebetween.

4. A device according to Claim 1 or one of the preceding Claims, **characterized in that** the toothed portions (12, 13) of the closure cap (6) and of the sleeve portion (5) of the housing (4) engage in one another in the connected position, and the toothed portions (12, 13) are disengaged in the tensioning position.

5. A device according to Claim 1 or one of the preceding Claims, **characterized in that** the housing (4) comprises sleeve halves (9, 10) connected by way of a film hinge (8) and held in a closed position by way of a clip connexion (11, 11a).

6. A device according to Claim 1 or one of the preceding Claims, **characterized in that** the closure cap (6) has cams (16) on the opening edge, the cams (16) engaging in longitudinal grooves (15) in the sleeve portion (5) in the connected position and resting against a stop at the end of the grooves (15) in an end position.

## Revendications

1. Dispositif destiné à relier et à tendre des câbles Bowden, comportant un boîtier (4) qui est constitué de deux moitiés de douille et qui est destiné à recevoir un raccord amovible des câbles Bowden (2, 3), un appendice (3a) destiné à recevoir une gaine d'un câble Bowden (3) et un dispositif de tension pour une gaine de l'autre câble Bowden (2) étant prévus sur le boîtier (4), caractérisé en ce que le dispositif de tension
- comporte une portion de douille (5) formée d'une seule pièce sur le boîtier (4), en tant que premier élément de tension, et
- un capuchon de fermeture (6) d'une seule pièce, réalisé en tant que deuxième élément de tension,
- la gaine de l'autre câble Bowden des gaz (2) pouvant être montée dans le deuxième élément de tension, et
- un ressort de compression (7) qui prend appui par une extrémité dans la portion de douille (5) du boîtier (4) et qui par son autre extrémité s'applique contre le deuxième élément de tension, sous contrainte de compression, étant disposé dans le deuxième élément de tension, et
- le premier élément de tension et le deuxième élément de tension pouvant être amenés en engagement, par des portions de denture (12, 13) correspondantes, de manière que le deuxième élément de tension puisse s'accrocher au premier élément de tension, dans une position de liaison et de manière qu'il puisse coulisser sur le premier élément de tension, dans une position de tension.

2. Dispositif selon la revendication 1, caractérisé en ce que le capuchon de fermeture (6) peut être emboîté sur la portion de douille (5) du boîtier (4) et présente sur son côté intérieur des portions de denture (13) qui sont disposées en correspondance avec des portions de denture (12) de la portion de douille (5).

3. Dispositif selon les revendications 1 ou 2, caractérisé en ce qu'au moins deux portions de denture (12 et 13) s'étendant transversalement, prévues sur la portion de douille (5) et dans le capuchon de fermeture (6), se font face et présentent des surfaces libres (12a, 13a) intermédiaires.

4. Dispositif selon la revendication 1 ou l'une des revendications précédentes, caractérisé en ce que dans la position de liaison, les portions de denture (12, 13) du capuchon de fermeture (6) et de la portion de douille (5) du boîtier (4), s'engagent les unes dans les autres, et en ce que dans la position de tension, les portions de denture (12, 13) sont désengagées.

5. Dispositif selon la revendication 1 ou l'une des revendications précédentes, caractérisé en ce que le boîtier (4) comprend des moitiés de douille (9, 10), reliées par une charnière en film (8), lesquelles sont maintenues dans une position fermée, par un assemblage à clips (11, 1 la).

6. Dispositif selon la revendication 1 ou l'une des revendications précédentes, caractérisé en ce que le capuchon de fermeture (6) présente sur son bord d'ouverture des cames (16) qui s'engagent, dans la position de liaison, dans des gorges longitudinales (15) de la portion de douille (5) et qui, dans une position extrême, s'appliquent contre une butée, à l'extrémité des gorges (15).
